# EUROPEAN PATENT APPLICATION

(11) **EP 4 529 051 A1**
(43) Date of publication of application: **26.03.2025**
(21) Application number: 23306557.2
(22) Date of filing: 20.09.2023
(51) Int. Cl.: H04B 17/373, H04B 17/391, H04W 4/40, H04W 36/00

(54) **EXCHANGE OF INFORMATION BETWEEN TRP FOR DISTRIBUTED RADIO SIGNAL PREDICTION**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: CORLAY, Vincent, 35708 RENNES CEDEX 7 (FR); NGUYEN, Viet-Hoa, 35708 RENNES CÉDEX 7 (FR); GRESSET, Nicolas, 35708 RENNES CEDEX 7 (FR)
(74) Representative: Plasseraud IP

(57) **Abstract**

The disclosure relates to a method for transmission in a vehicular radio communication system, implemented at a processing unit (204a) associated to a source transmission and reception point (102, 104), TRP, the method comprising, for each of one or more radio signals in a local radio environment of the source TRP:
a) evaluating a relevance of information derived from measured characteristics of the radio signal for one or more potential target TRPs (112, 122, 132, 142); or
a') deriving the information from the measured characteristics of the radio signal such that the information is relevant for the one or more potential target TRPs; then
if the information is relevant for the one or more potential target TRPs, b) transmitting the information from the source TRP to an exploitation unit (206b, 206c, 206d, 206e) associated with that target TRP, thereby enabling the exploitation unit to predict future characteristics of a local radio environment at that target TRP.

## Description

### DOMAIN

The present invention relates to telecommunications and more particularly to a method for transmission in a vehicular radio communication system, a communication method in a vehicular radio communication system, a non-transitory storage medium, a processing unit and an exploitation unit.

### BACKGROUND

Wireless communication systems rely heavily on accurate characterization and prediction of radio signals from devices, which is critical for various aspects within and outside the communication system. Devices within the communication network, often referred to as users, benefit from tracking the radio conditions of users under coverage or specific parameters relevant to radio planning. Unlike conventional short-term Channel State Information (CSI), characterizing the radio condition provides valuable long-term information.

On the other hand, there are external devices, commonly known as interferers or interference sources, which can significantly impact the quality of wireless services by degrading received signals. Understanding the interference situation is crucial to identify potential anomalies caused by excessive interference from external sources. Moreover, interference knowledge enables optimizing radio-related functions such as beamforming, link adaptation, and efficient allocation of radio resources.

A co-pending patent application to the same applicant addresses the problem of monitoring interference in a Radio-Frequency (RF) environment. The analysis is based on the observation carried on by a fixed infrastructure, comprising at least one RF receiver (Rx) with a fixed and known position. The said receiver is configured to passively measure interference emitted by interferers, meaning it receives the signal without any prior knowledge, active interaction, control or signaling with the interferers. The co-pending patent application is focused on addressing moving interferers which varying transmission locations introduce dynamism to the interference environment. The approach involves a learning process to classify interference analysis into two distinct categories: interferer-specific and environment-specific.

However, the co-pending patent application exclusively deals with the processing carried out by a single receiver to estimate and separate interference characteristics. It does not encompass the application of such interference monitoring technology to a road infrastructure setup or similar scenarios.

Hence, there is a pressing need for novel devices and methods that overcome the aforementioned limitations and may be used to extend the benefits of interference monitoring to diverse applications.

### SUMMARY

The invention is defined by the appended independent claims. Additional features and advantages of the concepts herein disclosed are set forth in the description which follows.

The present disclosure aims at improving the situation.

In particular, the distinct aspects outlined in this disclosure collectively contribute to enable an efficient prediction of future radio environment characteristics for one or more potential target transmission and reception points, TRPs, based on relevant information derived from measured radio signal characteristics and to enable an improved transmission planning and resource allocation for vehicular radio communication systems.

Generally, the enhanced prediction capability provided by the distinct aspects outlined in this disclosure allows for proactive decision-making and optimization of communication parameters.

To this end, the present disclosure describes a method for transmission in a vehicular radio communication system, implemented at a processing unit associated to a source transmission and reception point, TRP, the method comprising, for each of one or more radio signals in a local radio environment of the source TRP:
a) evaluating a relevance of information derived from measured characteristics of the radio signal for one or more potential target TRPs; or
a') deriving the information from the measured characteristics of the radio signal such that the information is relevant for the one or more potential target TRPs; then if the information is relevant for the one or more potential target TRPs, b) transmitting the information from the source TRP to an exploitation unit associated with that target TRP, thereby enabling the exploitation unit to predict future characteristics of a local radio environment at that target TRP.

The condition on the relevance of the information, as associated to b), relates to a positive result of a) evaluating the relevance of the information or to the information being derived as per a') from the measured characteristics of the radio signal. Conversely, if the information is not relevant for the one or more potential target TRPs, that is, if a result of a) evaluating the relevance of the information is negative, then, the method comprises: b') not transmitting the information from the source TRP to the exploitation unit associated with that target TRP.

The above method enables accurate estimation of future radio conditions at potential target TRPs, optimizing communication planning and resource allocation. Also, transmitting relevant information to target TRPs allows the vehicular radio communication system to proactively adapt to changing radio conditions, resulting in enhanced communication performance.

For example, a) may be based on one or more of the following:
the measured characteristics of the radio signal,
the information derived from the measured characteristics of the radio signal,
a direction and/or a distance of the potential target TRP relative to the source TRP,
a radio metric, computed or received by the processing unit, indicating a future quality of the local radio environment of the target TRP.

The present disclosure also describes a communication method in a vehicular radio communication system, implemented at an exploitation unit associated to a target transmission and reception point, TRP, the method comprising, for each of one or more radio signals in a local radio environment of a source TRP:
c) receiving information transmitted by the source TRP, the information being derived from measured characteristics of the radio signal and being relevant for the target TRP to predict characteristics of future radio signals in the local radio environment of the target TRP;
d) exploiting the received information to predict characteristics of future radio signals in the local radio environment of the target TRP, and
e) utilizing the predictions made in d) to determine a parameter of a future communication of the target TRP.

The above communication method empowers the target TRP to make informed decisions and improve future communication strategies to achieve better performance.

For example, d) may further comprise:
- specifying parameters of the target TRP; and
- predicting a radio signal impact associated to the target TRP, which accounts for the specified parameters and incorporates the characteristics of the future radio signals in the local radio environment of the target TRP.

For example, the measured characteristics of the radio signal may include power and/or phase characteristics and/or variation functions of interference measurements and/or a radio metric indicating a future quality of the local radio environment of the source TRP.

For example, the parameters of the target TRP may include receiver sensitivity, antenna gain, equalizer and/or noise figure.

For example, e) may further comprise:
computing a radio metric indicating a future quality of the local radio environment of the target TRP based on the predictions made in d) and determining the parameter of the future communication of the target TRP based on the computed radio metric.

In examples of the above methods, the measured characteristics of the radio signal, or the information derived from the measured characteristics of the radio signal, may include parameters of the local environment of the source TRP such as an indication of vehicle speed, vehicle distance and/or vehicle density for at least one direction of a vehicle and/or at least one direction of a vehicle flow.

In examples of the above methods, the information may be transmitted from the source TRP to the target TRP via a static radio link or using dynamic radio links.

In the case dynamic radio links are used,
the target TRP may be further configured to receive additional information via additional radio links, and
the source TRP and/or the target TRP may be further configured to dynamically detect and prune non-essential radio links based on specific criteria related to predetermined requirements of the target TRP and/or to characteristics of information transmitted via said radio links.

By detecting and pruning non-essential radio links, the method can dynamically adapt to varying network conditions, ensuring reliable data exchange. This further contributes to improving the use of available resources, leading to improved communication performance.

The present disclosure also describes a non-transitory storage medium storing instructions of a computer program which, when executed by a computer, cause the computer to carry out one or both of the above methods.

The present disclosure also describes a processing unit associated to a source transmission and reception point, TRP, of a vehicular radio communication system, the processing unit being configured, for each of one or more radio signals in a local radio environment of the source TRP, for :
a) evaluating a relevance of information derived from measured characteristics of the radio signal for one or more potential target TRPs; or
a') deriving the information from the measured characteristics of the radio signal such that the information is relevant for the one or more potential target TRPs; then if the information is relevant for the one or more potential target TRPs, b) transmitting the information from the source TRP to an exploitation unit associated with that target TRP, thereby enabling the exploitation unit to predict future characteristics of a local radio environment at that target TRP.

The present disclosure also describes an exploitation unit associated to a target transmission and reception point, TRP, of a vehicular radio communication system the exploitation unit being configured, for each of one or more radio signals in a local radio environment of a source TRP, for :
c) receiving information transmitted by the source TRP, the information being derived from measured characteristics of the radio signal and being relevant for the target TRP to predict characteristics of future radio signals in the local radio environment of the target TRP;
d) exploiting the received information to predict characteristics of future radio signals in the local radio environment of the target TRP, and
e) utilizing the predictions made in d) to determine a parameter of a future communication of the target TRP.

### BRIEF DESCRIPTION OF THE DRAWINGS

Figure 1 depicts communications between transmission and reception points of a radio communication system in an exemplary embodiment.
Figure 2 depicts a general architecture of an algorithm of a computer program suitable for conducting interference prediction in an exemplary embodiment.
Figure 3 depicts communications between a source transmission and reception point and two target transmission and reception points of a radio communication system in an exemplary embodiment.
Figure 4 depicts a general structure of an end-to-end training of neural networks which may respectively be utilized by a processing unit and by an exploitation unit in an exemplary embodiment.
Figure 5 depicts communications using static links between transmission and reception points of a radio communication system in a scenario with a low density of vehicles, in an exemplary embodiment.
Figure 6 depicts inputs and outputs of an algorithm of a computer program suitable for conducting interference prediction in an exemplary embodiment.
Figure 7 depicts communications using dynamic links between transmission and reception points of a radio communication system in a scenario with a high density of vehicles, in an exemplary embodiment.

### DETAILED DESCRIPTION

This general description is intended to present an exemplary implementation of the invention. Variations, modifications, and alternatives may be apparent to those skilled in the art and can be made without departing from the scope of the invention. The specific configuration of components and the manner in which they interact are merely illustrative, and alternative configurations and interactions are within the scope of the appended claims.

In light of the general description, the following specific embodiments serve to further illustrate the proposed invention. These embodiments correspond to distinct usecases.

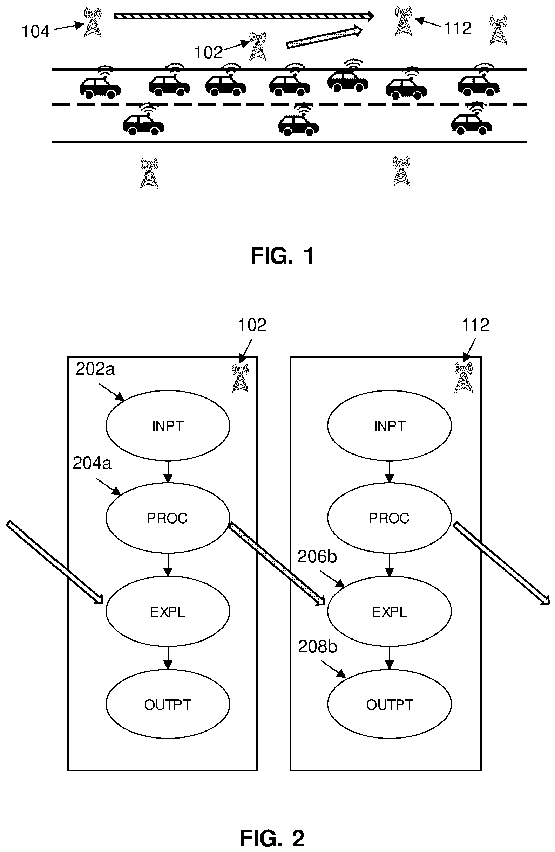

Figure 1 shows an exemplary scenario with several transmission and reception points (TRPs). This can be for instance a road with several radio units (RU) (102, 104, 112) on the side. The cars on the road are considered as vehicular radio transmitters.

Each TRP can obtain some measurements of its local radio environment. In an exemplary implementation, when the vehicular radio transmitters are not in communication with the TRPs, the received signal is seen as interference. In other words, the measurements collected by each TRP may be relative to interferers in its local radio environment.

An objective of the TRPs is to be able to predict the level of radio signal of the vehicular radio transmitters, as perceived by the radio units. The information of prediction may be used for radio planning tasks, such as resource scheduling. This information may then, in turn, be used by at least one other (subsequent) TRP for predicting a future level of radio signal in its own local environment.

Figure 1 depicts an example where a first TRP (102) and a second TRP each collect measurements of their respective local radio environment and transmit information derived from these measurements to a third TRP.

A first concern is that filtering the information to be transmitted is desirable to minimize the radio overhead. However, it is not trivial to establish how to filter the information, in other words, to determine what information a TRP should transmit to other/subsequent TRP.

A second concern is whether a TRP should transmit the information only to its neighboring TRP or also to TRP located at a greater distance. For instance, an information from a neighboring TRP is likely to be up to date but has a low predictive power. Here, a high predictive power means that the information enables to perform prediction significantly in advance (large Δt). On the contrary, a low predictive power means that the information does not enable to perform predictions significantly in advance (small Δt). An information can have a low predictive power but of high accuracy, when it enables to perform highly accurate prediction but not significantly in advance.

The general framework disclosed herein relates to an architecture and a related signaling which are provided to enable a predictive estimation of radio signal levels originating from vehicular radio transmitters, as perceived by a TRP infrastructure.

An aim of this general framework is to address the two concerns mentioned above, both in scenarios with a low density and with a high density of vehicles.

The definitions of some terms and expressions used throughout this document are now provided, in connection with Figures 1 and 2.

A source TRP (102) is a TRP configured to obtain information relative to one or more devices in its local radio environment. The information can include a measured power of a signal, a measured phase, or both. It can be relative to a wideband measurement and/or a long duration, for instance to characterize delays (and obtain an impulse channel response). Alternatively, it can also be one or more instantaneous measurements.

A target TRP (112) is defined in connection with a source TRP (102): it is desired to predict one or more parameters of one or more future radio signals in the local radio environment of the target TRP (112) using at least part of the information obtained by the source TRP (102).

The approach depicted in this document is not restricted to communication between any specific types of TRPs. The source TRP and target TRP may therefore designate any communication device in a vehicular radio communication system.

A processing unit (204a) is a functional module associated with a source TRP (102). It can be for instance located in the source TRP (102), in a server, or in the target TRP (112). The processing unit (204a) obtains one or more measurements as one or more inputs (202a) and outputs information relative to measurements and which is relevant with respect to the prediction of the radio signal perceived by the target TRP (112). The information output by the processing unit (204a) can include parameters of the radio signal. These parameters may include a variation function of interference measurements, a speed of flow, a density of flow. These parameters may further be organized in subsets of parameters, a subset of parameter being relative to a respective part of a plurality of radio signal measurements. For example, the processing unit (204a) may be configured to separate the measurements of two vehicle flows going in two opposite directions into two parts each representing one of the two directions.

The exploitation unit (206b) is a functional module associated with a target TRP (112). It can be for instance located either in the source TRP (102), in a server, or in the target TRP (112). The exploitation unit (206b) may perform a prediction related to a radio signal or to a radio signal impact associated to the target TRP (112), using the information received from at least one processing unit (204a). The prediction of radio signal impact may also include the specification of the target TRP (112) which may be different from the specification of the source TRP. For instance, different TRPs may exhibit different Rx sensitivities, antenna gains, equalizers, noise figures, etc..

The information output by the exploitation unit (206b) may then be used to generate one or more outputs (208b), such as by computing a radio metric indicating the future quality of the local radio environment of the target TRP (112), such as the SINR or the throughput.

A TRP may play independently the roles of both a source TRP and a target TRP. Moreover, the processing unit relative to a source TRP can transmit information to the exploitation unit relative to a target TRP, where both the source TRP and the target TRP are the same TRP.

For instance, assume that a TRP performs some interference prediction. Then, later it can use a measurement to assess the accuracy of the prediction and potentially improve the model. Hence, these measurements can be used to assess the past prediction and correct the model if needed.

The processing unit (204a) and the exploitation unit (206b) are implemented in a manner known per se by any suitable computer or equivalent means and are connected to one another by a radio communication link which may be either static or dynamic.

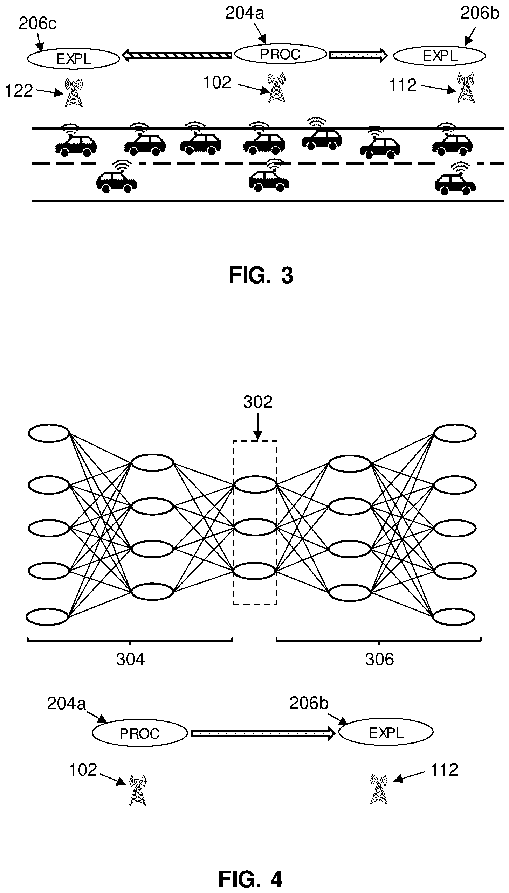

Figure 3 illustrates a scenario where two flows of vehicles move in opposing directions along a roadway. In this instance, a processing unit (204a) connected to a source TRP (102) utilizes static links to send information to two separate exploitation units (206b and 206c) associated with two different target TRPs (112 and 122) in each direction respectively. This information exchanged between the processing unit and the exploitation units may be parameters or selected measurements related with the radio signal generated by a flow of vehicles. It may serve for the exploitation units to perform flow-based predictions.

Naturally, the first target TRP (112) is interested in information related to the vehicle flow moving in its direction, while the second TRP (122) seeks information regarding the flow moving in the opposite direction. Determining the direction of the flow is a complex task which requires multiple measurements. When a TRP receives mixed signals from multiple flows, separating these signals becomes challenging. Therefore, it is desirable for the source TRP to partition these signals, which aids in reducing noise. Additionally, transmitting only pertinent information aids in data compression.

Consequently, the processing unit (204a) must segregate the source TRP related measurements into various labeled subsets. These could include two sets of parameters (like density and speed) associated with each traffic flow, or two distinct interference signals from each direction. Regardless of the method, it's vital to label the separated information, for instance, based on the detected flow direction. The processing unit can then use these labels to guide the delivery of segregated information to the appropriate exploitation unit. This process enables the transmission of specific information to the first (206b) and second (206c) exploitation units depending on the label, effectively transmitting information about traffic flow in a specific direction only to the relevant target TRPs.

Implementing this may involve training a neural network to perform source separation tasks. For instance, the processing unit may analyze radio signals in the local radio environment of the source TRP, thusly estimating the distance of the vehicles nearest to the source TRP and corresponding flow directions. The output from the processing unit may then be a set of parameters comprising estimated distances for each vehicle relative to the source TRP, optionally labeled with flow directions.

The processing unit can be trained in a supervised manner to associate radio signals with vehicle distances. This distance information, based on the detected traffic flow direction, is then transmitted to the target TRP and used as input data. The target TRP uses this data to predict future radio environment conditions.

If the prediction models used by the processing and exploitation units are neural networks, end-to-end training (with an auto-encoder structure) can be applied for more efficient cooperation. Figure 4 provides an example of this process. Two models (304, 306) are jointly trained; the inputs are local radio observations at the source TRP (102), and the labels are information relative to subsequent interferences at the target TRP (112). During the inference phase, the models are separated. The processing unit (204a) manages the first model (304), and the exploitation unit (206b) manages the second model (306). The processing unit transmits a latent space (302), which serves as the output of the first model and as the input to the second model.

For signal separation, the processing unit could be trained to extract the interference of a single flow from the observed aggregate interference. For this task, a Recurrent Neural Network, such as one with LSTM layers, could be used. The extracted signal would then be transmitted to the appropriate exploitation unit.

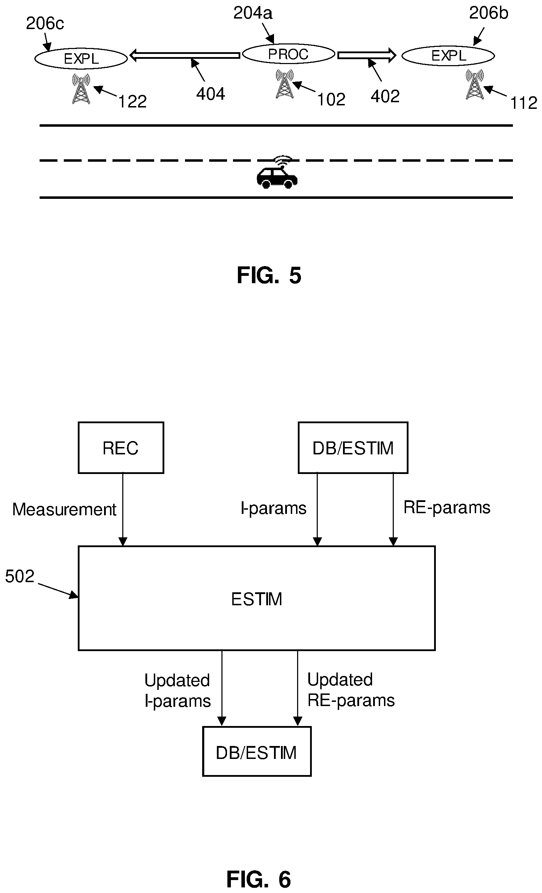

Figure 5 portrays an instance of communication between TRPs (102, 112) utilizing static links (402, 404) in a scenario characterized by a low vehicle density. In such a scenario it is possible to perform a per-vehicle tracking and prediction at an exploitation unit receiving from a processing unit parameters or selected measurements related with the vehicles radio signal.

In this context, the processing unit (204a) can, for instance, undertake the task of segregating the interference into two categories - parameters specific to the interferer and those specific to the radio environment. Analogous to the direction of the flows, the processing unit needs to detect the direction of an individual vehicle. Following this, the parameters that are specific to the interferer are dispatched to the appropriate exploitation unit.

Figure 6 serves as a graphical representation of the inputs and outputs for an estimation module (502) configured to compute the interferer-specific parameters (also referred to as "I-params") and the radio environment-specific parameters (termed "RE-params").

Specifically, the estimation module (502) receives inputs from the source TRP (102) in the form of measurements or information derived from such measurements. The estimation module (502) further receives additional inputs from a database or another estimator in the form of I-params and RE-params. It outputs updated I-params and updated RE-params, which are then either stored in a database or passed on to another estimator.

The aforementioned I-params could comprise variables such as velocity, transmitter power, and antenna gain. These parameters could be expressed either as a scalar value or a probability function.

The RE-params can take the form of a map illustrating RF signal attenuation within the zone under consideration, or alternatively, a modelling function of signal attenuation via a function of path loss and shadowing parameters. Like the I-params, these parameters can be scalar values or a probability function. The estimation algorithm, implemented within a processing unit, could leverage a Euclidean distance-based algorithm to update the scalar values of parameters, a Euclidean distance-based algorithm to update the probability function of parameters, or a Bayesian-based algorithm to update the probability function of parameters, all using Bayes' theorem, among other possibilities.

As referenced earlier, the information necessary for a given exploitation unit is then transmitted by the processing unit. For a target TRP positioned on the opposite side of the road, it could require the RE-params as both TRPs share the same environment but are interested in distinct vehicles. Conversely, for a target TRP located on the same side of the road, albeit further from the source TRP, the I-params could be more relevant as they share an interest in the same vehicles but don't share the same environment. It is worth noting that predicting the I-params of vehicles outside its range may pose a significant challenge for a TRP, even though this information is crucial for radio planning tasks.

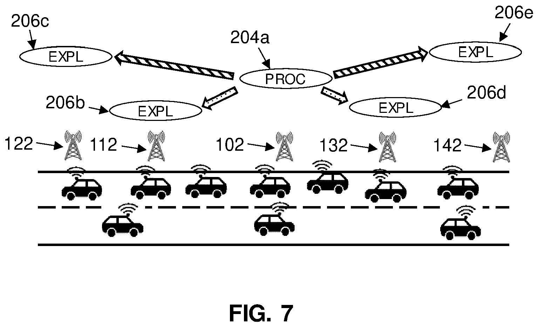

Scenarios involving dynamic links between processing units and exploitation units may also be explored. In this context, let us consider a processing unit initially broadcasting information to all its neighboring exploitation units, as exemplified in Figure 7.

Figure 7 illustrates a vehicular communication system comprising one source TRP (102) linked to a processing unit (204a) and four target TRPs (112, 122, 132, 142) respectively linked to exploitation units (206b, 206c, 206d, 206e). Four arrows represent the dynamic links between the processing unit (204a) and each of the exploitation units (206b, 206c, 206d, 206e).

The vehicular communication system may be configured to identify any unnecessary links. These superfluous links can then be pruned. For instance, should the exploitation units require advanced information, for instance, due to scheduling being carried out at low periodicity, information from more distant TRPs might be favored. The dynamic links represented by the arrows between the processing unit (204a) and one of the more distant exploitation units (206c, 206e) would then be considered necessary links, whereas the dynamic links represented by the arrows between the processing unit (204a) and one of the nearer exploitation units (206b, 206d) would then be considered unnecessary links which may be pruned.

In contrast, in cases where the exploitation units require highly correlated information, information from closer TRPs might be favored. For instance, let us consider a case where several target TRPs (102, 112, 122, 132) may also act as source TRPs which share the same processing unit (204a). The exploitation unit (206e) of the remaining target TRP (142), responsible for performing the interference prediction with respect to the local radio environment of said target TRP (142), may initially take as input the four signals received from the exploitation unit (206e). The exploitation unit (206e) might then identify that the signal corresponding to the farthest source TRP (122) doesn't influence the performance. The exploitation unit (206e) may then ignore this signal or generate an instruction for e.g. the processing unit (204a) to cease the transmission of this signal.

## Claims

1. A method for transmission in a vehicular radio communication system, implemented at a processing unit (204a) associated to a source transmission and reception point (102, 104), TRP, the method comprising, for each of one or more radio signals in a local radio environment of the source TRP:
a) evaluating a relevance of information derived from measured characteristics of the radio signal for one or more potential target TRPs (112, 122, 132, 142); or
a') deriving the information from the measured characteristics of the radio signal such that the information is relevant for the one or more potential target TRPs; then if the information is relevant for the one or more potential target TRPs, b) transmitting the information from the source TRP to an exploitation unit (206b, 206c, 206d, 206e) associated with that target TRP, thereby enabling the exploitation unit to predict future characteristics of a local radio environment at that target TRP.

2. A communication method in a vehicular radio communication system, implemented at an exploitation unit associated to a target transmission and reception point, TRP, the method comprising, for each of one or more radio signals in a local radio environment of a source TRP:
c) receiving information transmitted by the source TRP, the information being derived from measured characteristics of the radio signal and being relevant for the target TRP to predict characteristics of future radio signals in the local radio environment of the target TRP;
d) exploiting the received information to predict characteristics of future radio signals in the local radio environment of the target TRP, and
e) utilizing the predictions made in d) to determine a parameter of a future communication of the target TRP.

3. The method of claim 2, wherein e) further comprises:
computing a radio metric indicating a future quality of the local radio environment of the target TRP based on the predictions made in d) and determining the parameter of the future communication of the target TRP based on the computed radio metric.

4. The method of claim 1, wherein evaluating the relevance of the information is based on one or more of the following:
the measured characteristics of the radio signal,
the information derived from the measured characteristics of the radio signal,
a direction and/or a distance of the potential target TRP relative to the source TRP,
a radio metric, computed or received by the processing unit, indicating a future quality of the local radio environment of the target TRP.

5. The method of any one of claims 1 to 4, wherein the measured characteristics of the radio signal include power and/or phase characteristics and/or variation functions of interference measurements and/or a radio metric indicating a future quality of the local radio environment of the source TRP.

6. The method of any one of claims 1 to 5, wherein the measured characteristics of the radio signal, or the information derived from the measured characteristics of the radio signal, include parameters of the local environment of the source TRP such as an indication of vehicle speed, vehicle distance and/or vehicle density for at least one direction of a vehicle and/or at least one direction of a vehicle flow.

7. The method of claim 2 or 3, wherein d) further comprises:
- specifying parameters of the target TRP; and
- predicting a radio signal impact associated to the target TRP, which accounts for the specified parameters and incorporates the characteristics of the future radio signals in the local radio environment of the target TRP.

8. The method of claim 7, wherein the parameters of the target TRP include receiver sensitivity, antenna gain, equalizer and/or noise figure.

9. The method of any one of claims 1 to 8, wherein the information is transmitted from the source TRP to the target TRP via a static radio link.

10. The method of any one of claims 1 to 8, wherein the information is transmitted by the source TRP using dynamic radio links.

11. The method of claim 10, wherein
the target TRP is further configured to receive additional information via additional radio links and
the source TRP and/or the target TRP is further configured to dynamically detect and prune non-essential radio links based on specific criteria related to predetermined requirements of the target TRP and/or to characteristics of information transmitted via said radio links.

12. A non-transitory storage medium storing instructions of a computer program which, when executed by a computer, cause the computer to carry out the method of any one of claims 1 to 13.

13. A processing unit associated to a source transmission and reception point, TRP, of a vehicular radio communication system, the processing unit being configured, for each of one or more radio signals in a local radio environment of the source TRP, for :
a) evaluating a relevance of information derived from measured characteristics of the radio signal for one or more potential target TRPs; or
a') deriving the information from the measured characteristics of the radio signal such that the information is relevant for the one or more potential target TRPs; then if the information is relevant for the one or more potential target TRPs, b) transmitting the information from the source TRP to an exploitation unit associated with that target TRP, thereby enabling the exploitation unit to predict future characteristics of a local radio environment at that target TRP.

14. An exploitation unit associated to a target transmission and reception point, TRP, of a vehicular radio communication system the exploitation unit being configured, for each of one or more radio signals in a local radio environment of a source TRP, for :
c) receiving information transmitted by the source TRP, the information being derived from measured characteristics of the radio signal and being relevant for the target TRP to predict characteristics of future radio signals in the local radio environment of the target TRP;
d) exploiting the received information to predict characteristics of future radio signals in the local radio environment of the target TRP, and
e) utilizing the predictions made in d) to determine a parameter of a future communication of the target TRP.
